**Europäisches Patentamt**

**European Patent Office**

**Office européen des brevets**

(19)

(11) Veröffentlichungsnummer: **0 154 258 B1**

# EUROPÄISCHE PATENTSCHRIFT

(12)

(45) Veröffentlichungstag der Patentschrift:
**14.06.89**

(51) Int. Cl.⁴: **A 23 L 1/221**, B 01 D 9/02

(21) Anmeldenummer: **85101869.7**

(22) Anmeldetag: **21.02.85**

(54) Herstellung von Gewürzextrakten.

(30) Priorität: **08.03.84 CH 1145/84**
**11.01.85 CH 115/85**

(43) Veröffentlichungstag der Anmeldung:
**11.09.85 Patentblatt 85/37**

(45) Bekanntmachung des Hinweises auf die Patenterteilung:
**14.06.89 Patentblatt 89/24**

(84) Benannte Vertragsstaaten:
**CH DE FR GB LI**

(56) Entgegenhaltungen:
**EP-A- 0 010 665**
**EP-A- 0 023 680**
**EP-A- 0 062 893**
**EP-A- 0 065 106**
**EP-A- 0 075 134**
**EP-A- 0 135 743**

(73) Patentinhaber: **L. GIVAUDAN & CIE Société Anonyme,**
**CH-1214 Vernier-Genève (CH)**

(72) Erfinder: **Calame, Jean-Pierre, Dr., Goldwandstrasse,**
**CH-5400 Ennetbaden (CH)**
Erfinder: **Steiner, Rudolf, Bungertweg 9,**
**CH-8303 Bassersdorf (CH)**

(74) Vertreter: **Urech, Peter, Dr. et al,**
**Grenzacherstrasse 124 Postfach 3255, CH-4002 Basel**
**(CH)**

ACTORUM AG

## Beschreibung

Die Erfindung betrifft ein Verfahren zur Herstellung von Gewürzextrakten durch Extraktion mit gesundheitlich unbedenklichen Gasen im bzgl. Druck und Temperatur überkritischen Zustand. Das Verfahren ist dadurch gekennzeichnet, daß man dem unbeladenen gasförmigen Extraktionsmittel kontinuierlich ca. 2 bis ca. 8 Gew.-% eines organischen Lösungsmittels als Schleppmittel zumischt, und mit dem erhaltenen homogenen Gemisch im bzgl. Druck und Temperatur überkritischen Zustand die Gewürze extrahiert und die Extrakte aus den erhaltenen Lösungen durch Druck und/oder Temperaturänderungen abscheidet.

Die Erfindung betrifft weiterhin die auf diese Weise erhältlichen Gewürzextrakte und schließlich die Verwendung dieser Extrakte, insbesondere als würzende Zugabe zur menschlichen Nahrung bzw. zu Genußmitteln.

Aus der US-PS 4 440 398 (Fried. Krupp GmbH) ist ein Verfahren zur Gewinnung der Paprikaaroma- und -farbstoffe bekanntgeworden, bei dem ebenfalls von der Extraktion mittels Lösungsmitteln im überkritischen Zustand Gebrauch gemacht wird. Da dieses Verfahren primär zum Ziel hat, die – in größeren Mengen vorliegenden und weitaus wichtigeren – Farbstoffe zu gewinnen, wird vorzugsweise in zwei Stufen extrahiert, und zwar werden zunächst bei niedrigerem Druck insbesondere die Aromastoffe extrahiert und hierauf bei höherem Druck die Farbstoffe. So wird denn gemäß Beispiel 1 bei niedrigerem Druck ein Extrakt von pastöser Konsistenz erhalten, der die Aromastoffe enthält. Die erforderliche Isolierung dieser Aromastoffe, d.h. ihre möglichst vollständige Befreiung von den unerwünschten fett-, harz- und wachsartigen Nebenprodukten wird nicht beschrieben, sie wäre aber recht aufwendig und erfordert beispielsweise Flüssig-flüssig-Extraktionen, die das beschriebene Verfahren zur Gewinnung der Aromastoffe deshalb als unattraktiv erscheinen lassen. Nun ist es allgemein bekannt, daß bei Extraktionen mit Lösungsmitteln im überkritischen Zustand Schleppmittel verwendet werden können, dies zur Erhöhung der Beladbarkeit, bzw. Erhöhung der Extraktionsleistung. Im Hinblick auf die Ergebnisse des Beispiels 1 erschien die Verwendung eines Schleppmittels zwecks Gewinnung der Aromastoffe deshalb nicht ratsam, weil eine Erhöhung der Extraktionsleistung infolge noch ausgeprägterer Extraktion der fett- und wachsartigen Stoffe in der Folge eine noch schwierigere Isolierung der Aromastoffe erwarten ließ.

Es wurde nun aber gefunden, daß die Extraktion mit dem Gas im überkritischen Zustand in Anwesenheit eines Schleppmittels und die darauffolgende Abscheidung der Aromastoffe dann besonders einfach und rationell gestaltet werden kann, wenn die Konzentration des Schleppmittels in dem bestimmten, oben definierten engen Bereich gehalten wird. Die Gesamtmenge der extrahierten Stoffe ist zwar im Durchschnitt bis zu ca. 50% kleiner als im Falle des Arbeitens ohne Schleppmittel, aber das Schleppmittel wirkt in dem definierten Bereich ausgesprochen selektiv bezüglich der erwünschten Aromastoffe, indem unerwünschte Begleitstoffe nur zum geringeren Teil mitextrahiert werden. Der in diesem Fall beobachtete selektive Effekt des Schleppmittels ist unerwartet und konnte in der Folge bei der erfindungsgemäßen Extraktion von Gewürzen generell festgestellt werden; er wird als verantwortlich für die günstigen olfaktorischen Eigenschaften der erfindungsgemäß erhältlichen Gewürze angesehen.

Die für das erfindungsgemäße Verfahren zweckmäßigen Parameter sind die folgenden:

Geeignete Extraktionsmittel sind $CO_2$, $N_2O$, Butan, Propan, Äthan, Äthylen oder Gemische dieser Gase; verwendet wird vorzugsweise $CO_2$.

Die kritischen Daten dieser Extraktionsmittel sind die folgenden:

| Extraktionsmittel | $p_{krit.}$ | $T_{krit.}$ |
|---|---|---|
| $CO_2$ | 72,9 bar | 31,1 °C |
| $N_2O$ | 71,4 bar | 36,5 °C |
| $C_4H_{10}$ | 37,5 bar | 152,0 °C |
| $C_3H_8$ | 42,0 bar | 96,8 °C |
| $C_2H_6$ | 48,3 bar | 32,4 °C |
| $C_2H_4$ | 50,7 bar | 9,5 °C |

Geeignete Schleppmittel sind (gegebenenfalls chlorierte) Alkane wie Pentan, Hexan; Methylenchlorid, Di- und Trichloräthylen, etc., Alkanole wie Methanol, Äthanol, Propanol, etc., Alkancarbonsäureester wie Essigsäuremethylester, Essigsäureäthylester, Essigsäureisopropylester, etc., aliphatische Ketone wie Aceton oder Acetylaceton, etc., aliphatische Äther wie Dimethyläther, Diäthyläther, Diisopropyläther, etc. Im Rahmen der vorliegenden Erfindung sind insbesondere Hexan, Äthanol, Propanol und Methylacetat bevorzugt.

Im allgemeinen wird man bei fetthaltigen Gewürzen eher polare Schleppmittel, wie z.B. Alkanole, im Falle von fettfreien bzw. fettarmen Gewürzen eher apolare Schleppmittel, wie z.B. Alkane verwenden.

Extrahiert wird zweckmäßigerweise bei Drükken von ca. 80 bar bis ca. 320 bar, insbesondere bei ca. 100 bar bis ca. 300 bar. Im speziellen liegt der Extraktionsdruck zweckmäßigerweise mindestens 5 bar über dem kritischen Druck des jeweiligen Gases bzw. Gasgemisches.

Der geeignete Temperaturbereich für die Extraktion liegt, wie gesagt, im überkritischen Bereich des benützten Gases, zweckmäßigerweise zwischen ca. 20 °C bis ca. 85 °C, insbesondere zwischen ca. 40 °C bis ca. 70 °C. Im speziellen liegt dieser Bereich zweckmäßigerweise zwischen ca. 1 °C bis ca. 60 °C über der kritischen Temperatur des jeweiligen Gases bzw. Gasgemisches. Der bevorzugte Temperaturbereich für $CO_2$ liegt zwischen 32,1 °C und 92,1 °C, wobei 40 °C bis 70 °C besonders bevorzugt sind.

Was die Abscheidung des Gewürzextraktes aus der beladenen Phase betrifft, kann diese Abscheidung bewerkstelligt werden, indem

a) der Druck auf Werte unterhalb $p_{krit.}$ gebracht wird und die Temperatur auf Werte oberhalb $T_{krit.}$ belassen wird, oder daß man

b) sowohl Druck als auch Temperatur auf Werte unterhalb den kritischen Größen bringt, oder daß man

c) die Abscheidung durch reine Temperaturerhöhung, und zwar isobar erzwingt. Der Druck bleibt also in diesem Fall konstant. [Die Dichte des Gases sinkt mit steigender Temperatur, und mit geringerer Dichte sinkt auch die Extraktionskraft des Gases.]

Zweckmäßige Bereiche sind für:
a) p = ca. 30 bar bis ca. 75 bar und
 T = ca. 35 °C bis ca. 85 °C
b) p = ca. 30 bar bis ca. 75 bar,
 T = ca. +10 °C bis ca. −10 °C
c) T ca. 10 °C bis ca. 50 °C (Erhöhung).

Vorzugsweise wird bei Drücken von ca. 40 bis ca. 65 bar, insbesondere von ca. 50 bis ca. 55 bar und bei Temperaturen von ca. 0 bis ca. 24 °C, insbesondere von ca. 9 bis ca. 15 °C abgeschieden.

Der Gasdurchfluß pro kg Edukt beträgt zweckmäßigerweise ca. 5–70 kg Gas, insbesondere ca. 10–25 kg Gas.

Die Extraktionszeit hängt auch von der Größe der extrahierten Partie ab und beträgt vorzugsweise ca. 1 bis ca. 4 Stunden.

Als Extraktionsgut können insbesondere die üblichen Pflanzenteile, also z.B. Wurzeln, Rinden, Blätter, Früchte, Samen und Teile davon Verwendung finden.

Beispiele von Gewürzen sind:
Angelika, Anis, Basilikum, Beifuß, Bibernell, Bohnenkraut, Borretsch, Cardamon, Cassis, Chili, Dill, Dost (wilder Majoran), Estragon, Fenchel, Ginseng, Hopfen, Ingwer, Kalmus, Kapern, Kardonenartischoken, Kerbel, Knoblauch, Koriander, Kreuzkümmel (römischer Kümmel), Kümmel, Kurkuma, Lavendel, Liebstöckel, Löffelkraut, Lorbeerblätter, Macis, Majoran, Meerrettich, Melisse, Minze, Mohn, Nelken, Oregano, Paprika, Petersilie, Pfeffer, Pfefferminz, Pilze, Piment, Pimpinelle, Quendel, Rainfarn, Raute, Rosmarin, Safran, Salbei, Sarsaparilla, Sassafras, Sauerampfer, Schnittlauch, Sellerie, Senf, Sesam, Sternanis, Thymian, Tripmadam, Vanille, Verbena, Wacholderbeeren, Waldmeister, Wermut, Wintergrün, Ysop, Zimt, Zwiebeln.

Die einfach unterstrichenen Gewürze sind bevorzugt und die punktiert unterstrichenen Gewürze sind besonders bevorzugt.

Das gegebenenfalls gereinigte, zerkleinerte, und vorzugsweise getrocknete Extraktionsgut wird, zweckmäßigerweise chargenweise, in den Extraktionsbehälter gegeben.

Die apparative Durchführung kann in für Extraktionen mit Gasen im überkritischen Zustand bekannten, konventioneller Weise durchgeführt werden. Gemäß untenstehendem Fließbild wird demnach die Extraktion zweckmäßig in Form eines Kreisprozesses durchgeführt.

Gemäß Abbildung wird das verflüßigte Gas aus dem Vorratsbehälter mit einem Verdichter (Kompressor, Flüssigkeitspumpe), z.B. einer Kolbenoder Membranflüssigkeitspumpe komprimiert, zweckmäßigerweise auf den gewünschten Extraktionsdruck, und anschließend mittels eines Wärmeaustauschers auf die gewünschte Extraktionstemperatur gebracht. Auch das Schleppmittel wird komprimiert und dem Gas zugemischt, und zwar zweckmäßigerweise mittels einer Dosierpumpe. Es ist jedoch unerheblich, ob das Schleppmittel dem Gas im über- oder unterkritischen Bereich zugegeben wird. Die Parameter Druck, Temperatur und Art und Menge des Schleppmittels werden vorzugsweise dem spezifischen Extraktionsproblem angepaßt. Die Entscheidungsgrundlagen sind insbesondere Extraktausbeute, organoleptische Qualität und Wirtschaftlichkeit.

Das Gasgemisch wird nun durch das sich im Extraktionsbehälter befindliche Extraktionsgut gepumpt. Zwecks einfacher Handhabung wird letzteres in einem Stahlkorb oder in einem Stoffsack in den Extraktionsbehälter gegeben. Aus dem Extraktionsgut werden die wesentlichen Riech- und Geschmacksstoffe herausgelöst und die nun beladene überkritische Phase verläßt den Behälter am oberen Ende. Nach Passieren eines Regelventils ist durch Druckerniederung und/oder Temperaturänderung der Entmischungszustand herbeigeführt. Die Lösungseigenschaften des Gases verringern sich nun drastisch und die vorher gelösten Stoffe werden zusammen mit dem Schleppmittel im Abscheidebehälter abgeschieden. Das Extraktionsmittel liegt teilweise als Flüssiggas vor und wird durch Verdampfen wieder in den Extraktionskreislauf zurückgeführt.

Nach einer ersten Variante wird das Gas hierauf wieder verflüßigt und gelangt in den Vorratsbehälter. Nach einer zweiten Variante wird das Gas als solches über einen Gasverdichter, z.B. eine Gasmembranpumpe in den Kreislauf zurückgeführt.

Der Extrakt und das Schleppmittel werden als flüssige Phasen aus dem unter Druck stehenden Abscheidebehälter abgelassen. Da diese Phase mit dem Extraktionsmittel gesättigt ist, das beim Entspannen gegen Atmosphäre sehr rasch verdampft, kühlt sich der Rohextrakt üblicherweise weit unter den Nullpunkt ab. Durch diese Abkühlung frieren die unlöslicheren Stoffe, wie Fette, Harze etc. aus und können durch einfache Trennmethoden, wie Filtration, Zentrifugation oder durch Dekantieren vom restlichen Extrakt abgetrennt werden. Das klare Filtrat kann nun z.B. unter Verwendung schonender Destillationsmethoden vom Schleppmittel befreit werden.

Die erfindungsgemäß erhältlichen Gewürzextrakte sind insbesondere wegen ihrer ausgesprochen natürlichen Noten von Interesse.

Sie können z.B. in der Lebensmittelindustrie, Bäckerei, bei der Getränkefabrikation, in der Kosmetik- und Tabakindustrie in üblicher, dem Fachmann bekannter Weise als solche oder als Komponenten von (Geschmackstoff)Kompositionen Verwendung finden, siehe z.B.

E. Ziegler, Die natürlichen und künstlichen Aromen, Dr. Alfred Hüthig Verlag GmbH, Heidelberg, 1982,

H.B. Heath, Flavor Technology: Profiles, Products, Applications, Avi Publishing Company, Inc. Westport, Connecticut, 1978,

G. Fenaroli, Fenaroli's Handbook for Flavor Ingredients, Second Edition, Volume 2, CRC-Press, Inc. Cleveland, Ohio, 1975, or

J. Merory, Flood Flavorings, Composition, Manufacture and Use, Second Edition, Avi Publishing Company, Inc., Westport, Connecticut, 1968.

Ihre geruchlichen und geschmacklichen Qualitäten sind hervorragend. Infolge Keimfreiheit sind sie sehr gut lagerfähig. Die Löslichkeitseigenschaften, insbesondere in Wasser und Wasser-Äthylalkoholgemischen sind hervorragend.

Beispiel 1
1. Wachholder
a) 500 g zerstossene Wachholderbeeren werden unter folgenden Bedingungen mit $CO_2$ extrahiert:

| | |
|---|---|
| Extraktionsdruck | 290 bar |
| Extraktionstemperatur | 60 °C |
| Abscheidedruck | 52 bar |
| Abscheidetemperatur | 11 °C |
| Schleppmittelmenge | 3,6 ml Hexan pro Minute (entspricht einer Schleppmittelkonzentration von 3,4%) |
| Extraktionsdauer | 12 Stunden |

Der kalte Rohextrakt wird filtriert, um das unerwünschte Fett abzutrennen; anschließend dampft man im Vakuum das Schleppmittel ab. Man erhält 36,1 g eines bräunlichen Öles. Die Ausbeute beträgt 7,2%. Der Extrakt weist den typischen Geruch und Geschmack der Wachholderbeeren auf.

b) Die gleichen Bedingungen, jedoch ohne Zugabe eines Schleppmittels führen zu einem heterogenen Gemisch aus Fett und Aromaöl in einer Ausbeute von 5,1%. Dieser Extrakt ist zwar geruchlich typisch, kann aber nicht verwendet werden, da zuviel Fettballast vorhanden ist. Die sensorische Qualität entspricht bei weitem nicht derjenigen von a), indem insbesondere die Aromenstärke, aber auch das Aromenprofil zu wünschen übrig läßt.

Beispiel 2
2. Oreganum
a) 400 g Oreganumblätter werden unter folgenden Bedingungen mit $CO_2$ extrahiert:

| | |
|---|---|
| Extraktionsdruck | 150 bar |
| Extraktionstemperatur | 40 °C |
| Abscheidedruck | 55 bar |
| Abscheidetemperatur | 14 °C |
| Schleppmittelmenge | 3 ml Äthylalkohol pro Minute (entspricht einer Schleppmittelkonzentration von 5,2%) |
| Extraktionsdauer | 5½ Stunden |

Der kalte Rohextrakt wird filtriert, um das unerwünschte Fett abzutrennen und anschließend dampft man im Vakuum das Schleppmittel ab. Man erhält 17,1 g eines grünlichen Öles. Die Ausbeute beträgt 4,3%. Der Extrakt hat einen sehr typischen starken aromatischen Geruch und den Geschmack von Oreganum.

b) Die gleichen Bedingungen, jedoch ohne Verwendung eines Schleppmittels ergeben ein heterogenes Gemisch von 20 g, bestehend aus ca. ⅓ Oreganumextrakt und ca. ⅔ Fett und Wasser. Dieser Extrakt ist zwar geruchlich typisch, kann aber nicht verwendet werden, da zuviel Fett vorhanden ist. Auch die sensorische Qualität entspricht bei weitem nicht derjenigen von a), indem insbesondere die Aromenstärke und die Löslichkeit zu wünschen übrig lassen.

c) Die gleichen Bedingungen, jedoch unter Vorlage der gesamten Menge Schleppmittel (1 l) zu Beginn der Extraktion im Extraktionsbehälter ergeben 26,5 g eines stark grün gefärbten Extraktes, der viel schwerer wasserlöslich ist als a), und geruchlich und geschmacklich schwächer ist. Die sensorische Qualität entspricht bei weitem nicht derjenigen von a), indem insbesondere die Aromenstärke, aber auch das Aromenprofil zu wünschen übrig läßt.

Beispiel 3
3. Ceylon-Zimt
a) 750 g gemahlener Ceylon-Zimt werden unter folgenden Bedingungen mit $CO_2$ extrahiert:

| | |
|---|---|
| Extraktionsdruck | 200 bar |
| Extraktionstemperatur | 60 °C |
| Abscheidedruck | 43 bar |
| Abscheidetemperatur | 3 °C |
| Schleppmittelmenge | 2 ml Äthylalkohol pro Minute (entspricht einer Schleppmittelkonzentration von 3,4%) |
| Extraktionsdauer | 3 Stunden |

Der kalte Rohextrakt wird filtriert, um das unerwünschte Fett abzutrennen und anschließend dampft man im Vakuum das Schleppmittel ab. Man erhält 19,5 g eines gelben Öles. Der Extrakt hat einen sehr typischen süssen, warmen, holzigen Geruch und Geschmack nach Ceylon-Zimt. Die Ausbeute beträgt 2,6% (bzgl. Trockeneinwaage).

b) Die gleichen Bedingungen, jedoch ohne Verwendung eines Schleppmittels ergeben ein heterogenes Gemisch von 22,8 g, bestehend aus 10,56 Zimtextrakt und 12,24 g Fett und Wasser. Dieser Extrakt ist zwar geruchlich typisch, unterscheidet sich aber sensorisch von a), und zwar insbesondere bezüglich Aromenstärke, und kann ohne weitere Aufarbeitung nicht verwendet werden. Die Ausbeute an Zimtextraktöl beträgt 1,4% (bzgl. Trockeneinwaage). Wie oben gesagt, entspricht die sensorische Qualität bei weitem nicht der von a).

c) Die gleichen Bedingungen, jedoch unter Vorlage der gesamten Menge Schleppmittel von 360 ml zu Beginn der Extraktion im Extraktionsbehälter ergeben 15 g eines gelben Öles, das zwar geruchlich typisch ist, aber geschmacklich und bezüglich Ausbeute a) unterlegen ist. Die Ausbeute an Extrakt beträgt 2,0% (bzgl. Trockeneinwaage).

Eine analoge Beobachtung wurde auch generell gemacht, wenn das Schleppmittel kontinuierlich zugegeben wurde, dies aber in zu großen Mengen, d.h. über 8%: Der Grund für die magerere Ausbeute an organoleptisch akzeptablem Produkt ist wahrscheinlich in beiden Fällen derselbe: Das «Lösevermögen» des überkritischen Gases wird vorwiegend vom Schleppmittel beansprucht, das überkritische Gas verliert an nötiger «Extraktionskraft».

Beispiel 4

Die Resultate einer Reihe weiterer Extraktionen sind aus der untenstehenden Tabelle ersichtlich.

Tabelle

| Extraktionsgas | Lösungsmittel | Schleppmittel | -konz.% | Extraktion p (bar) | T (°C) | Abscheidung p (bar) | T (°C) | Ausbeute | Sensorischer Befund |
|---|---|---|---|---|---|---|---|---|---|
| Ingwer | $CO_2$ | Äthanol | 3,6 | 300 | 40 | 52 | 11 | 4,4 | typisch nach Ingweröl; klares gelbes Öl |
| Gewürznelken | $CO_2$ | Äthanol | 3,2 | 200 | 60 | 52 | 11 | 15,8 | typisch nach Gewürznelken; klares gelbes Öl |
| Basilikum | $CO_2$ | Äthanol | 5,8 | 200 | 40 | 56 | 15 | 1,3 | typisch nach Basilikumextrakt, würzig, krautig; klares grünes Öl |
| Rosmarin | $CO_2$ | Äthanol | 6,0 | 250 | 60 | 53 | 12 | 7,5 | typisch nach Rosmarinextrakt, krautig; klarer, löslicher, grüner Extrakt |
| Anis | $CO_2$ | Hexan | 2,8 | 200 | 40 | 52 | 11 | 12,3 | typisch nach Anisextrakt, würzig, süß, staubig; klares gelbes Öl |
| Cardamon | $CO_2$ | Methylacetat | 4,1 | 150 | 60 | 50 | 9 | 5,8 | typisch nach Cardamonextrakt, frisch, würzig; klares gelbes Öl |

Tabelle (Fortsetzung)

| Extraktionsgut | Lösungsmittel | Schleppmittel | -konz.% | Extraktion p (bar) | Extraktion T (°C) | Abscheidung p (bar) | Abscheidung T (°C) | Ausbeute | Sensorischer Befund |
|---|---|---|---|---|---|---|---|---|---|
| Kümmel | CO₂ | Methylacetat | 3,6 | 200 | 40 | 52 | 11 | 7,5 | typisch nach Kümmelextrakt, frisch, staubig, würzig; klares gelbes Öl |
| Thymian | CO₂ | Hexan | 3,5 | 150 | 40 | 50 | 9 | 2,1 | typisch nach Thymianextrakt, würzig, krautig; klares gelbes Öl |
| Vanille | CO₂ | Äthanol | 3,9 | 300 | 40 | 53 | 12 | 3,5 | typisch nach Vanilleextrakt, sehr natürlich; klares, gelbes Öl (krist.) |
| Salbei | CO₂ | Methylacetat | 3,7 | 200 | 40 | 53 | 12 | 4,3 | typisch nach Salbeiextrakt, frisch, würzig; klares braunes Öl |
| Koriander | CO₂ | Äthanol | 5,7 | 300 | 40 | 54 | 13 | 1,2 | typisch nach Koriander, trocken, balsamisch, blumig; klares braunes Öl |
| Oregano | CO₂ | Äthanol | 5,2 | 150 | 40 | 55 | 14 | 5,4 | typisch nach Oreganoextrakt, krautig, würzig; dunkelgrünes Öl |
| Paprika (sweet red pepper) | CO₂ / CO₂ | Äthanol / Äthanol | 3,0 / 2,0 | 300 / 300 | 60 / 60 | 54 / 58 | 12 / 17 | { 11,3 / 9,2 | typischer, sehr frischer Paprikaextrakt; klares rotes Öl |
| Paprika (sweet red pepper) | CO₂ / CO₂ | Äthanol / Äthanol | 1,6 / 1,2 | 300 / 300 | 60 / 60 | 58 / 58 | 17 / 17 | { 8,3 / 7,5 | Extrakt signifikant schwächer und untypischer als oben, Geschmack trocken, nach Heu, modrig; rotes Öl |
| Paprika (sweet red pepper) | CO₂ | Äthanol | 1,0 | 300 | 60 | 58 | 17 | 7,7 | wie oben unter 7,5; Geschmack noch fettiger |
| Extraktion ohne Schleppmittelzugabe (US-PS 4,400,398) | | | | | | | | | |
| Paprika (sweet red pepper) Bsp. 2 | CO₂ | | | 300 | 40 | 40 | 40 | 8,2 (inkl. Wasser) | «dark red concentrate, of viscous, oil-like consistency; contains water» |
| Paprika (hot red pepper) Bsp. 1 | CO₂ | | | 120 | 40 | 56 | – | 15,1 (inkl. Wasser) | «orange-yellow extract of pasty consistency; contains water» |

Alle %-Angaben für das Verhältnis $\dfrac{\text{Schleppmittel}}{\text{Extraktionsgas}}$ beziehen sich im Rahmen der gegenständlichen Arbeiten auf das Verhältnis $\dfrac{\text{Gewicht}}{\text{Gewicht}}$

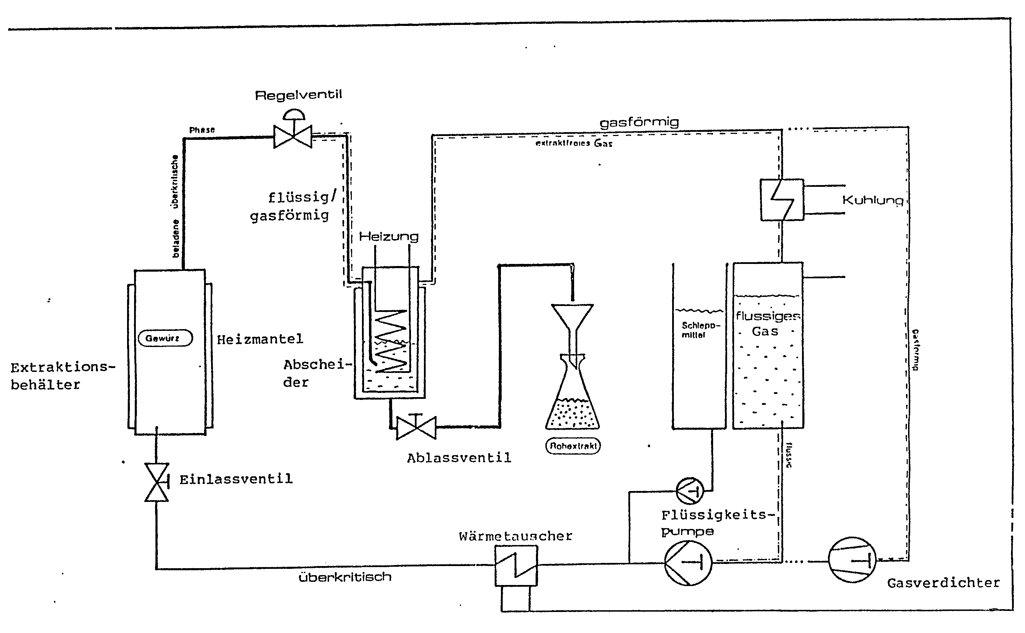

## Patentansprüche

1. Verfahren zur Herstellung von Gewürzextrakten durch Extraktion mit gesundheitlich unbedenklichen Gasen im bzgl. Druck und Temperatur überkritischen Zustand, dadurch gekennzeichnet, daß man dem unbeladenen gasförmigen Extraktionsmittel kontinuierlich ca. 2 bis ca. 8 Gew.-% eines organischen Lösungsmittels als Schleppmittel zumischt, und mit dem erhaltenen homogenen Gemisch im bzgl. Druck und Temperatur überkritischen Zustand die Gewürze extrahiert und die Extrakte aus den erhaltenen Lösungen durch Druck und/oder Temperaturänderungen abscheidet.

2. Verfahren gemäß Anspruch 1, dadurch gekennzeichnet, daß als Extraktionsmittel $CO_2$, $N_2O$, Äthan, Butan, Propan, Äthylen oder Gemische dieser Gase verwendet werden.

3. Verfahren gemäß Anspruch 1 oder 2, dadurch gekennzeichnet, daß als Schleppmittel ein gegebenenfalls chloriertes Alkan, ein Alkanol, ein Alkancarbonsäureester, ein aliphatisches Keton oder ein aliphatischer Äther verwendet wird.

4. Verfahren gemäß Anspruch 1, 2 oder 3, dadurch gekennzeichnet, daß als Schleppmittel Hexan, Äthanol, Propanol oder Methylacetat verwendet wird.

5. Verfahren nach einem der Ansprüche 1 bis 4, dadurch gekennzeichnet, daß man bei Extraktionsdrücken von ca. 80 bar bis ca. 320 bar, insbesondere bei ca. 100 bar bis ca. 300 bar arbeitet.

6. Verfahren nach einem der Ansprüche 1 bis 5, dadurch gekennzeichnet, daß man bei mindestens 5 bar über dem kritischen Druck des jeweiligen Gases bzw. Gasgemisches extrahiert.

7. Verfahren nach einem der Ansprüche 1 bis 6, dadurch gekennzeichnet, daß man bei Temperaturen von ca. 20 °C bis ca. 85 °C, insbesondere bei ca. 40 °C bis ca. 70 °C extrahiert.

8. Verfahren nach einem der Ansprüche 1 bis 7, dadurch gekennzeichnet, daß man ca. 1 °C bis ca. 60 °C über der kritischen Temperatur des jeweiligen Gases bzw. Gasgemisches extrahiert.

9. Verfahren nach einem der Ansprüche 1 bis 5, dadurch gekennzeichnet, daß zwecks Abscheidung des Gewürzextraktes aus der beladenen Gasphase der Druck unterhalb des kritischen Druckes und die Temperatur überkritisch ist.

10. Verfahren nach einem der Ansprüche 1 bis 5, dadurch gekennzeichnet, daß man zwecks Abscheidung des Gewürzextraktes die Temperatur auf unterhalb der kritischen Temperatur des Extraktionsmittels und den Druck ebenfalls auf unterhalb des kritischen Druckes des Extraktionsmittels senkt.

11. Verfahren nach einem der Ansprüche 1 bis 5, dadurch gekennzeichnet, daß zwecks Abscheidung des Gewürzextraktes aus der beladenen Phase die Temperatur der letzteren erhöht wird.

12. Verfahren nach einem der Ansprüche 9 bis 11, dadurch gekennzeichnet, daß der Gewürzextrakt bei Drücken von ca. 40 bis ca. 65 bar, insbesondere von ca. 50 bis ca. 55 bar und bei Temperaturen von ca. 0 bis ca. 24 °C, insbesondere von ca. 9 bis ca. 15 °C abgeschieden wird.

13. Verfahren nach einem der Ansprüche 1 bis 12, dadurch gekennzeichnet, daß der Gasdurchfluß pro kg Edukt ca. 5–70 kg Gas, insbesondere ca. 10–25 kg Gas beträgt.

14. Verfahren nach einem der Ansprüche 1 bis 13, dadurch gekennzeichnet, daß der erhaltene rohe Gewürzextrakt durch Entspannen der beladenen Phase abgeschieden wird, daß das mitextrahierte Fett durch die eintretende Abkühlung ausfällt und vom Gewürzextrakt abgetrennt wird.

15. Verfahren nach Anspruch 14, dadurch gekennzeichnet, daß das Fett bei Temperaturen von ca. 0 °C bis ca. −70 °C, insbesondere bei ca. −60 °C bis ca. −70 °C abgetrennt wird.

16. Verfahren nach einem der Ansprüche 1 bis 5, dadurch gekennzeichnet, daß das überkritische Gas im Kreislauf geführt wird.

17. Verfahren nach einem der Ansprüche 1 bis 6, dadurch gekennzeichnet, daß Wurzeln, Rinden, Blätter, Blüten, Früchte, Samen oder Teile davon extrahiert werden.

18. Verfahren nach einem der Ansprüche 1 bis 17, dadurch gekennzeichnet, daß man Anis, Basilikum, Bohnenkraut, Cardamon, Dost (wilder Majoran), Estragon, Fenchel, Hopfen, Kreuzkümmel (römischer Kümmel), Kümmel, Lavendel, Nelken, Salbei, Sellerie, Sternanis, Thymian oder Vanille extrahiert.

19. Verfahren nach einem der Ansprüche 1 bis 17, dadurch gekennzeichnet, daß man Ingwer, Oregano, Rosmarin, Wacholderbeeren oder Zimt extrahiert.

20. Gewürzextrakte, erhältlich durch Extraktion nach dem Verfahren einer der Ansprüche 1 bis 19.

21. Verwendung der Extrakte nach Anspruch 20 als würzende Zugabe zur menschlichen Nahrung bzw. zu Genußmitteln.

## Claims

1. A process for the manufacture of spice extracts by extraction with gases which are not detrimental to health and which are in the super-critical state with respect to pressure and temperature, characterized by continuously admixing 2 to about 8 wt.% of an organic solvent as an entrainer with the unloaded gaseous extraction agent, and extracting the spices with the resulting homogeneous mixture in the super-critical state in respect to pressure and temperature and separating the extracts from the solutions obtained by means of pressure and/or temperature variations.

2. A process according to claim 1, characterized in that $CO_2$, $N_2O$, ethane, butane, propane, ethylene or mixtures of these gases is/are used as the extraction agent.

3. A process according to claim 1 or 2, characterized in that an optionally chlorinated alkane, an alkanol, an alkanecarboxylic acid ester, an aliphatic ketone or an aliphatic ether is used as the entrainer.

4. A process according to claim 1, 2 or 3, characterized in that hexane, ethanol, propanol or methyl acetate is used as the entrainer.

5. A process according to any one of claims 1 to 4, characterized in that the extraction is carried out at extraction pressures of about 80 bar to about 320 bar, especially at about 100 bar to about 300 bar.

6. A process according to any one of claims 1 to 5, characterized in that the extraction is carried out at least 5 bar above the critical pressure of the respective gas or gas mixture.

7. A process according to any one of claims 1 to 6, characterized in that the extraction is carried out at temperatures of about 20 °C to about 85 °C, especially at about 40 °C to about 70 °C.

8. A process according to any one of claims 1 to 7, characterized in that the extraction is carried out about 1 °C to about 60 °C above the critical temperature of the respective gas or gas mixture.

9. A process according to any one of claims 1 to 5, characterized in that in order to separate the spice extract from the loaded gas phase the pressure is below the critical pressure and the temperature is super-critical.

10. A process according to any one of claims 1 to 5, characterized in that in order to separate the spice extract the temperature is lowered to below the critical temperature of the extraction agent and the pressure is also lowered to below the critical pressure of the extraction agent.

11. A process according to any one of claims 1 to 5, characterized in that in order to separate the spice extract from the loaded phase the temperature of the latter is increased.

12. A process according to any one of claims 9 to 11, characterized in that the spice extract is separated at pressures of about 40 to about 65 bar, especially of about 50 to about 55 bar, and at temperatures of about 0 to about 24 °C, especially of about 9 to about 15 °C.

13. A process according to any one of claims 1 to 12, characterized in that the gas throughput per kg of educt amounts to about 5–70 kg of gas, especially about 10–25 kg of gas.

14. A process according to any one of claims 1 to 13, characterized in that the crude spice extract obtained is separated by releasing the pressure of the loaded phase, the concomitantly extracted fat separating as a result of the cooling which occurs and being separated from the spice extract.

15. A process according to claim 14, characterized in that the fat is separated at temperatures of about 0 °C to about −70 °C, especially at about −60 °C to about −70 °C.

16. A process according to any one of claims 1 to 5, characterized in that the super-critical gas is circulated in a cyclic process.

17. A process according to any one of claims 1 to 6, characterized in that roots, barks, leaves, flowers, fruits, seeds or parts thereof are extracted.

18. A process according to any one of claims 1 to 17, characterized in that anise, basil, savory, cardamon, wild marjoram, tarragon, fennel, hops, cumin, caraway, lavender, cloves, sage, celery, star anise, thyme or vanilla is/are extracted.

19. A process according to any one of claims 1 to 17, characterized in that ginger, oregano, rosemary, juniper berries or cinnamon is/are extracted.

20. Spice extracts, obtainable by extraction according to the process of any one of claims 1 to 19.

21. The use of the extracts according to claim 20 as spicy additives to human food or to semi-luxury consumables.

**Revendications**

1. Procédé pour préparer des extraits d'aromates par extraction avec des gaz ne présentant pas d'inconvénient pour la santé, ces gaz étant dans un état supercritique en ce qui concerne la pression et la température, caractérisé en ce que l'on mélange en continu le moyen d'extraction gazeux non chargé avec de 2 à 8% en poids environ d'un solvant organique comme moyen d'entraînement, en ce que l'on extrait les aromates avec le mélange homogène obtenu, à l'état supercritique en ce qui concerne la pression et la température, et en ce que l'on sépare les extraits des solutions obtenues par des variations de pression et/ou de température.

2. Procédé selon la revendication 1, caractérisé en ce que l'on utilise comme moyen d'extraction $CO_2$, $N_2O$, l'éthane, le butane, le propane, l'éthylène ou des mélanges de ces gaz.

3. Procédé selon l'une quelconque des revendications 1 ou 2, caractérisé en ce que l'on utilise comme moyen d'entraînement un alcane éventuellement chloré, un alcanol, un ester d'acide carboxylique d'alcane, une cétone aliphatique ou un éther aliphatique.

4. Procédé selon l'une quelconque des revendications 1, 2 ou 3, caractérisé en ce que l'on utilise comme moyen d'entraînement l'hexane, l'éthanol, le propanol ou l'acétate de méthyle.

5. Procédé selon l'une quelconque des revendications 1 à 4, caractérisé en ce que l'on travaille avec des pressions d'extraction d'environ 80 bars à environ 320 bars, en particulier d'environ 100 bars à environ 300 bars.

6. Procédé selon l'une quelconque des revendications 1 à 5, caractérisé en ce que l'on effectue l'extraction au moins 5 bars au-dessus de la pression critique du gaz concerné ou du mélange de gaz concerné.

7. Procédé selon l'une quelconque des revendications 1 à 6, caractérisé en ce que l'on effectue l'extraction à des températures d'environ 20 °C à environ 85 °C, en particulier d'environ 40 °C à environ 70 °C.

8. Procédé selon l'une quelconque des revendications 1 à 7, caractérisé en ce que l'on effectue l'extraction d'environ 1 °C à environ 60 °C au-dessus de la température critique du gaz concerné ou du mélange de gaz concerné.

9. Procédé selon l'une quelconque des revendications 1 à 5, caractérisé en ce que, pour séparer l'extrait d'aromates de la phase gazeuse chargée, la pression est au-dessous de la pression critique et la température est supercritique.

10. Procédé selon l'une quelconque des revendications 1 à 5, caractérisé en ce que, pour séparer l'extrait d'aromates, la température est abaissée au-dessous de la température critique du moyen d'extraction, et la pression est également abaissée au-dessous de la pression critique du moyen d'extraction.

11. Procédé selon l'une quelconque des revendications 1 à 5, caractérisé en ce que, pour séparer l'extrait d'aromates de la phase chargée, on élève la température de cette dernière.

12. Procédé selon l'une quelconque des revendications 9 à 11, caractérisé en ce que l'on effectue la séparation de l'extrait d'aromates à des pressions d'environ 40 à environ 65 bars, en particulier d'environ 50 à environ 55 bars et à des températures d'environ 0 à environ 24 °C, en particulier d'environ 9 à environ 15 °C.

13. Procédé selon l'une quelconque des revendications 1 à 12, caractérisé en ce que la circulation de gaz par kg de produit entraîné est environ de 5 à 70 kg de gaz, en particulier environ de 10 à 25 kg de gaz.

14. Procédé selon l'une quelconque des revendications 1 à 13, caractérisé en ce que l'extrait d'aromates brut obtenu est séparé par détente de la phase chargée et en ce que la graisse entraînée avec l'extrait est précipitée par le refroidissement produit et se sépare de l'extrait d'aromates.

15. Procédé selon la revendication 14, caractérisé en ce que la graisse est séparée à des températures d'environ 0 °C à environ −70 °C, en particulier d'environ −60 °C à environ −70 °C.

16. Procédé selon l'une quelconque des revendications 1 à 5, caractérisé en ce que le gaz supercritique est recyclé.

17. Procédé selon l'une quelconque des revendications 1 à 6, caractérisé en ce que l'on effectue l'extraction sur des racines, des écorces, des feuilles, des fleurs, des fruits, des graines ou des parties correspondantes.

18. Procédé selon l'une quelconque des revendications 1 à 17, caractérisé en ce que l'on extrait de l'anis, du basilic, de la sarriette, de la cardamome, de la marjolaine sauvage, de l'estragon, du fenouil, du houblon, du cumin romain, du cumin, de la lavande, de l'œillet, de la sauge, du céleri, de la badiane, du thym ou de la vanille.

19. Procédé selon l'une quelconque des revendications 1 à 17, caractérisé en ce que l'on extrait du gingembre, de l'origan, du romarin, du genièvre ou de la cannelle.

20. Extraits d'aromates obtenus par extraction selon le procédé conforme à l'une quelconque des revendications 1 à 19.

21. Utilisation des extraits selon la revendication 20 comme additifs d'assaisonnement pour la nourriture humaine ou comme stimulant.